# EUROPÄISCHE PATENTANMELDUNG

(11) **EP 2 851 508 A2**
(43) Veröffentlichungstag der Anmeldung: **25.03.2015**
(21) Anmeldenummer: 14184198.1
(22) Anmeldetag: 10.09.2014
(51) Int. Cl.: F01D 1/02, F01D 9/02, B23P 15/34, B23C 3/00

(54) **Lavaldüse**

(30) Priorität: 20.09.2013 DE 102013218887
(71) Anmelder: Mahle International GmbH, 70376 Stuttgart (DE)
(72) Erfinder: Müller, Rolf, 71711 Steinheim/Murr (DE); Oechslen, Holger, 70184 Stuttgart (DE); Wieske, Peter, 70825 Korntal-Münchingen (DE)
(74) Vertreter: BRP Renaud & Partner mbB Rechtsanwälte Patentanwälte Steuerberater

(57) **Zusammenfassung**

Die Erfindung betrifft eine Lavaldüse (1), insbesondere für eine Turbine (2), mit einem konvergenten Leitungsabschnitt (3) mit einer ersten Längsachse (4) zum Beschleunigen einer Strömung (5) eines Arbeitsfluids von einer Unterschallgeschwindigkeit auf eine Schallgeschwindigkeit und einem mit dem konvergenten Leitungsabschnitt (3) fluidisch verbundenen divergenten Leitungsabschnitt (6) mit einer zweiten Längsachse (7) zum weiteren Beschleunigen der Strömung (5) von der Schallgeschwindigkeit auf eine Überschallgeschwindigkeit. Eine kompakte Bauform ergibt sich, wenn der konvergente Leitungsabschnitt (3) und der divergente Leitungsabschnitt (6) derart zueinander ausgerichtet sind, dass die erste Längsachse (4) die zweite Längsachse (7) schneidet.

Die Erfindung betrifft ferner eine Turbine mit einer solchen Lavaldüse sowie ein Verfahren zur Herstellung einer Lavaldüse.

## Beschreibung

Die Erfindung betrifft eine Lavaldüse nach dem Oberbegriff des Anspruchs 1 sowie eine Turbine nach dem Oberbegriff des Anspruchs 3. Die Erfindung betrifft darüber hinaus ein Herstellungsverfahren gemäß dem Oberbegriff des Anspruchs 6.

Strömungs- oder Fluidenergiemaschinen, welche die als Enthalpie bezeichnete Energie eines strömenden Fluids in Rotationsenergie und somit letztlich in mechanische Arbeit umwandeln, sind in der Energie- und Antriebstechnik unter dem Oberbegriff der Turbine bekannt. Gattungsgemäße Turbinen finden ihren Einsatz beispielsweise im Rahmen der Wärmerückgewinnung (WRG, WHR) aus Verbrennungsabgasen mittels eines geeigneten thermodynamischen Kreisprozesses. Dem Massenstrom eines Arbeitsmediums des thermodynamischen Kreisprozesses wird durch die möglichst wirbelfreie Umströmung der Turbinenschaufeln zu diesem Zweck ein Teil seiner Bewegungs-, Lage- oder Druckenergie entzogen, welche auf das Laufrad der Turbine übergeht. Das Laufrad überträgt die an ihm verrichtete Arbeit seinerseits auf eine drehbar gelagerte Turbinenwelle, welche die nutzbare Leistung an eine angekuppelte Arbeitsmaschine, beispielsweise einen Generator oder als Unterstützung eines Verbrennungsmotors, weitergeben kann.

Zur strömungsoptimierten Beaufschlagung des Laufrads dient dabei häufig ein im Strömungsmaschinenbau als Lavaldüse bezeichnetes Fluidelement mit im Eintrittsbereich zunächst konvergentem und stromab eines engen Übergangsbereichs zunehmend divergentem Querschnitt. Die spezifische Geometrie einer solchen Lavaldüse erlaubt es, die Unterschallströmung des Fluids entlang des konvergenten Abschnitts bis zum Erreichen einer konstanten Engstelle auf Schallgeschwindigkeit und im darauffolgenden divergenten Abschnitt weiter auf Überschallgeschwindigkeit zu beschleunigen, ohne dass es zu nennenswerten Verdichtungsstößen käme.

Als fertigungspraktischer Nachteil erweist sich indes die geringe Toleranz der aneinander angrenzenden Konturen des Strömungskanals. So kann bereits ein geringfügiger Versatz entlang der Übergangskante zwischen zwei benachbarten Abschnitten der Lavaldüse in deren Betrieb zu unerwünschten Turbulenzen der Strömung führen, welche die angestrebte Beschleunigungswirkung zunichtemachen.

Der Erfindung liegt daher die Aufgabe zugrunde, eine Lavaldüse sowie eine entsprechende Turbine bereitzustellen, welche bei vertretbarem Fertigungsaufwand einen höchstmöglichen Wirkungsgrad erzielen. Die Erfindung stellt sich ferner der Aufgabe, ein kostengünstiges Verfahren zur Herstellung einer solchen Düse zu schaffen.

Diese Aufgaben werden mittels einer Lavaldüse mit den Merkmalen des Anspruchs 1, einer Turbine mit den Merkmalen des Anspruchs 3 sowie mittels eines entsprechenden Herstellungsverfahrens mit den Merkmalen des Anspruchs 6 gelöst.

Die Erfindung basiert demnach auf dem Grundgedanken, von der etablierten Geometrie einer Lavaldüse mit konzentrischen Leitungsabschnitten zugunsten einer abgewinkelten Anordnung abzuweichen. Diese Formvariante fußt auf der Erkenntnis, dass die der gattungsgemäßen Lavaldüse inhärente Strömungsdynamik weitestgehend erhalten bleibt, solange sich die Längsachsen der Leitungsabschnitte zwar nicht überlagern, jedoch zumindest in einem Punkt räumlich schneiden.

Unter diesem Gesichtspunkt erweist sich ein Schnittwinkel zwischen 5° und 85° als besonders empfehlenswert, um einerseits eine kompakte Bauform der resultierenden Lavaldüse zu erzielen, andererseits aber massive Strömungsablösungen, bzw. sprunghafte Änderungen des Strömungszustandes, die in der Aerodynamik als Verdichtungsstöße bekannt sind, seitens des Arbeitsfluids zu vermeiden. Die Strömung wechselt somit stetig vom Unterschall in den Überschallbereich.

Ein vorteilhaftes Einsatzfeld der erfindungsgemäßen Lavaldüse stellt die Wärmerückgewinnung beispielsweise aus Verbrennungsabgasen dar. Gerade im Fahrzeugbau birgt hier die platzsparende Formgebung der Lavaldüse unter dem Gesichtspunkt eng begrenzten Bauraums beträchtliche Vorzüge gegenüber herkömmlichen Ansätzen. So lässt sich die vorgeschlagene Lavaldüse beispielsweise nutzen, um mittels des Arbeitsfluids das Laufrad einer Turbine und somit dessen Abtriebswelle in eine kontinuierliche Drehbewegung zu versetzen, sodass diese Welle eine mechanische Abtriebsarbeit verrichtet, die einem Kraftfahrzeug als Quelle kinetischer Energie dienen mag. Die Enthalpie des Arbeitsfluids wird auf dem beschriebenen Wege besonders effizient in mechanische Antriebsenergie überführt.

In diesem Szenario gestattet ein Eintritt der aus der Lavaldüse mündenden Strömung in das Laufrad unter einem Winkel zwischen 5° und 45° eine weitgehend wirbelfreie Umströmung der Turbinenschaufeln mit hoher Geschwindigkeit. Die thermische Energie des den Verbrennungsraum verlassenden Massestromes lässt sich somit zu einem beträchtlichen Anteil nutzbar machen, um den Primärenergieverbrauch des Kraftfahrzeugs auf ein funktionell erforderliches Mindestmaß zu senken und einen unnötigen Ausstoß von Kohlendioxid (CO₂) zu vermeiden.

Noch steigern lässt sich der Wirkungsgrad der Wärmerückgewinnung, wenn nicht lediglich eine, sondern mehrere, insbesondere mindestens drei Lavaldüsen zugleich fluidisch mit dem Laufrad verbunden werden. Der angestrebte strömungsbeschleunigende Effekt lässt sich in einer solchen Anordnung gleichsam vervielfachen, wobei die Redundanz der vorgeschlagenen Konfiguration zudem die Ausfallsicherheit der Gesamtvorrichtung, welche gerade im Automobilbau von elementarer Bedeutung ist, erhöht.

Zur Realisierung einer erfindungsgemäßen Lavaldüse kann sich der Fachmann indes eines Herstellungsverfahrens bedienen, welches auf der spanenden Formgebung eines einstückigen Grundkörpers auf zwei gegenüberliegenden Seiten basiert. In Betracht kommt insbesondere ein flächiges, in seinem Referenzzustand im Wesentlichen ebenes Werkstück aus steifem Material, welches im fachsprachlichen Gebrauch der technischen Mechanik und Bautechnik als Platte bezeichnet wird.

Erfolgt die beiderseitige Formgebung des Werkstücks dabei entlang zweier sich schneidender Längsachsen, so entstehen bei geeigneter Ausführung zwei Leitungsabschnitte in der oben beschriebenen relativen Ausrichtung, welche innerhalb des Werkstücks in einer Öffnung verbunden sind und so einen Fluidaustausch gemäß dem Wirkprinzip einer Lavaldüse erlauben. Als Spanen wird dabei nach der Dokumentationssystematik der DIN 8589 jedwedes mechanische Bearbeitungsverfahren verstanden, bei welchem in dem Werkstück die gewünschten Leitungsabschnitte geformt werden, indem überflüssiger Werkstoff in Gestalt von Spänen abgetragen wird. Im vorliegenden Fall empfiehlt sich zu diesem Zweck die Verwendung einer Werkzeugschneide mit definierter, meist keilförmiger Geometrie, welche dem Fertigungstechniker als geometrisch bestimmte Schneide geläufig ist.

Da die Leitungsabschnitte nach diesem Ansatz als im Wesentlichen hohlzylindrische Vertiefungen des Werkstücks gebildet werden, ist in verfahrenstechnischer Hinsicht insbesondere an das in DIN 8589-2 standardisierte Bohren zu denken, bei welchem ein um die jeweilige Längsachse rotierendes Bohrwerkzeug entlang selbiger Achse linear in das Werkstück geschoben wird. Als Alternative kommt das sogenannte Fräsen gemäß DIN 8589-3 in Betracht, in dessen Rahmen anstelle des Bohrwerkzeugs ein entsprechendes Fräswerkzeug, beispielsweise ein Kugelfräswerkzeug, zum Einsatz kommt. Die zur Formgebung erforderliche relative Vorschubbewegung kann dabei wahlweise durch eine Verschiebung des in einem Maschinentisch eingespannten Werkstücks oder des Fräswerkzeugs selbst um das Werkstück herum erzeugt werden, was dem Fachmann unter fertigungspraktischen Gesichtspunkten eine Vielzahl geeigneter Verfahrensvarianten eröffnet.

Sobald die Formgebung auf der Austrittsseite des Werkstücks, in welche sowohl der divergente als auch der konstante engste Leitungsabschnitt der zu fertigenden Lavaldüse münden soll, abgeschlossen ist, lässt sich die noch ausstehende Formgebung der Eintrittsseite wie folgt bewerkstelligen: Ein auf die vorgegebene Solltiefe des konvergenten Leitungsabschnitts in das Werkstück gesenktes Kugelfräswerkzeug wird in seinem Betriebszustand entlang der Oberfläche in Richtung des divergenten Leitungsabschnitts bewegt, bis dieser sich mit der so geformten Mulde verbindet. Die sich anschließende Vermessung der entstandenen Öffnung gestattet es, kalkulatorisch die vom Kugelfräswerkzeug noch zurückzulegende Entfernung zu ihrem geometrischen Endpunkt zu ermitteln, an welchem die im Zuge der Fräsbewegung graduell ausgeweitete Öffnung ihre - abermals vorgegebene - Endausdehnung erreichen wird.

Eine das Fertigungsverfahren abschließende spanende Nachbearbeitung der Öffnung ermöglicht die Glättung oder Rundung etwaiger Kanten, welche im unbearbeiteten Zustand zur Bildung von Turbulenzen im Strömungsfeld der Lavaldüse führen könnten. Im Gegensatz zur primären Formgebungsphase des Herstellungsprozesses kann hierbei eine unregelmäßig geformte sogenannte geometrisch unbestimmte Schneide zum spanenden Abtrag der Kanten dienen. Vorzüge bietet etwa das in DIN 8200 normierte Strahlspanen, welches im vorliegenden Zusammenhang beispielsweise gemäß dem Wirkprinzip des Abtrag- oder Entgratstrahlens Anwendung findet. Dem Fachmann erschließt der Einsatz dieser Technik zahlreiche verwendbare abrasive Zusätze, Strahlmedien und Beschleunigungsverfahren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine zur Wärmerückgewinnung eingesetzte erfindungsgemäße Turbine,
- Fig. 2: den Längsschnitt eines Werkstücks in einer ersten Verfahrensphase der Herstellung einer Lavaldüse gemäß einer Ausführungsform der Erfindung,
- Fig. 3: eine der Figur 2 entsprechende Schnittdarstellung in einer zweiten Verfahrensphase,
- Fig. 4: eine der Figur 2 entsprechende Schnittdarstellung in einer dritten Verfahrensphase und
- Fig. 5: eine der Figur 2 entsprechende Schnittdarstellung in einer vierten Verfahrensphase.

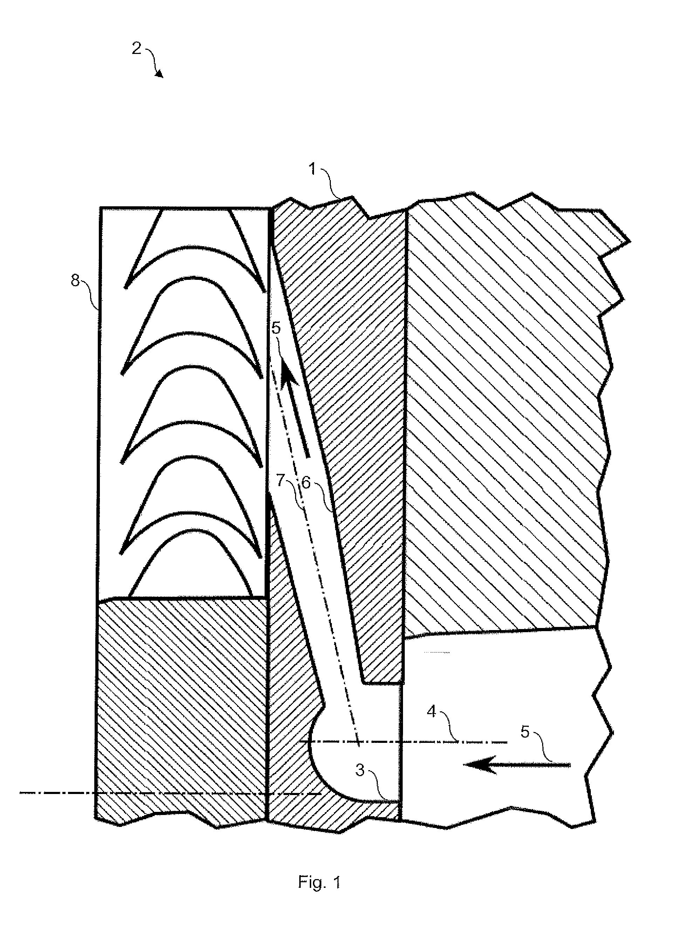

Die bereichsweise Schnittdarstellung der Figur 1 verdeutlicht den prinzipiellen Aufbau einer Turbine 2, welche durch ihre erfindungsgemäße Lavaldüse 1 gekennzeichnet ist. Eine drehbar gelagerte, in Figur 1 nicht erkennbare Abtriebswelle der Turbine 2 trägt dabei ein mit der Lavaldüse 1 fluidisch verbundenes Laufrad 8, welches grundsätzlich auf konventionellem Wege durch die Strömung 5 eines von der Lavaldüse 1 kanalisierten Arbeitsfluids in Drehbewegung versetzt werden kann.

Als charakteristisch erweist sich indes der Aufbau der gemäß der Darstellung der Figur 1 mittig angeordneten Lavaldüse 1, welche sich insbesondere aus einem konvergenten Leitungsabschnitt 3 mit einer ersten Längsachse 4 sowie einem mit dem Abschnitt 3 fluidisch verbundenen divergenten Leitungsabschnitt 6 mit einer zweiten Längsachse 7 und einem konstanten engsten Querschnitt zusammensetzt. Die Strömung 5 ist dabei zunächst näherungsweise parallel zur ersten Längsachse 4 des konvergenten Leitungsabschnitts 3 gerichtet, wenn sie - abbildungsgemäß von rechts - in die Lavaldüse 1 eintritt.

Der hohlzylindrische Einmündungsbereich des konvergenten Leitungsabschnitts 3 geht bereits in geringer Tiefe in eine konvexe, nahezu hohlkugelförmige Vertiefung über, welche durch die stetige Verengung seiner Wandung dem konvergenten Leitungsabschnitt 3 insgesamt die Form einer Mulde oder Delle verleiht. Die derart gebildete sacklochartige Wölbung öffnet sich einseitig in den konstanten und nachfolgend divergenten Leitungsabschnitt 6, dessen zweite Längsachse 7 die erste Längsachse 4 in einem Winkel von 80° etwa im Mittelpunkt des hohlkugelförmigen Bereichs schneidet.

Der divergente Leitungsabschnitt 6 schließt stromabwärts seiner Eintrittsöffnung vom konvergenten Leitungsabschnitt 3 mit einem hohlkegelstumpfförmigen Bereich an, sodass der Strömungsquerschnitt in Richtung des Laufrads 8 kontinuierlich zunimmt. Diese Divergenz endet in einem abermals hohlzylindrischen Ausmündungsbereich des divergenten Leitungsabschnitts 6, sodass die Strömung 5 in einem Eintrittswinkel von näherungsweise 10° auf die Schaufeln des Laufrads 8 trifft.

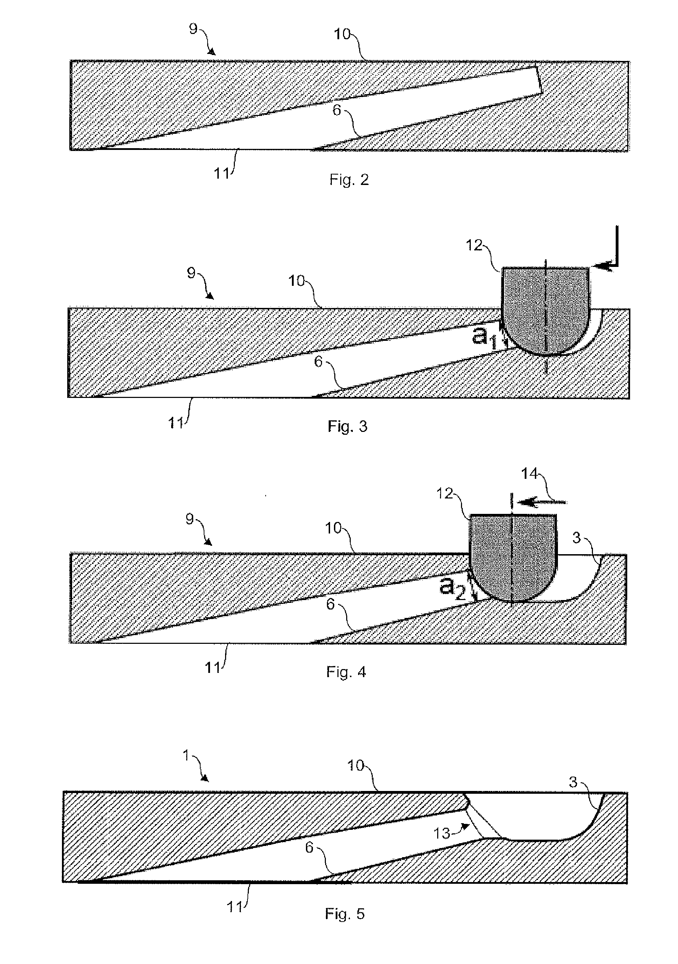

Die Figuren 2 bis 5 illustrieren die Herstellung einer Lavaldüse 1 gemäß einer zweiten, der Figur 1 ähnlichen Ausführungsform der Erfindung aus einem Werkstück 9 in Gestalt einer Platte mit einer Eintrittsseite 10 und einer dieser gegenüber liegenden Austrittsseite 11. Dabei zeigt Figur 2 den Zustand des Werkstücks 9 nach der das Verfahren einleitenden spanenden Bearbeitung der Austrittsseite 11, im Zuge derer ein divergenter Leitungsabschnitt 6 in dem Werkstück 9 geformt wurde.

Dem Szenario gemäß Figur 3 tritt nunmehr ein rotierender Fräskopf 12 hinzu, welcher in die Eintrittsseite 10 bis zu einer vorgegebenen Solltiefe abgesenkt und rechtwinklig dazu bis zum Erstkontakt mit dem divergenten Leitungsabschnitt 6 entlang der Eintrittsseite 10 verfahren wurde. Dieser Zustand erlaubt bereits eine Ermittlung des sich ergebenden Öffnungsmaßes a₁, welche der weiteren Querbewegung des Fräskopfs 12 rechnerisch zugrunde gelegt werden kann.

Hat der Fräskopf 12 seine in Figur 4 gezeigte Endposition erreicht, so nimmt die Öffnung ein gegenüber dem anfänglichen Öffnungsmaß a₁ geringfügig erhöhtes geometrisches Endmaß a₁ an, das den geringsten Strömungsquerschnitt des Arbeitfluids beim Durchqueren der resultierenden Lavaldüse 1 definiert. Wird nunmehr der Fräskopf 12 angehoben und die Öffnung 13 auf geeignete Weise gestrahlt oder anderweitig nachbearbeitet, so erhält die Lavaldüse 1 ihre in Figur 5 dargestellte endgültige Erscheinungsform.

## Patentansprüche

1. Lavaldüse (1), insbesondere für eine Turbine (2), mit
- einem konvergenten Leitungsabschnitt (3) mit einer ersten Längsachse (4) zum Beschleunigen einer Strömung (5) eines Arbeitsfluids von einer Unterschallgeschwindigkeit auf eine Schallgeschwindigkeit und
- einem mit dem konvergenten Leitungsabschnitt (3) fluidisch verbundenen divergenten Leitungsabschnitt (6) mit einer zweiten Längsachse (7) zum weiteren Beschleunigen der Strömung (5) von der Schallgeschwindigkeit auf eine Überschallgeschwindigkeit,
**dadurch gekennzeichnet,**
**dass** der konvergente Leitungsabschnitt (3) und der divergente Leitungsabschnitt (6) derart zueinander ausgerichtet sind, dass die erste Längsachse (4) die zweite Längsachse (7) schneidet.

2. Lavaldüse nach Anspruch 1,
**dadurch gekennzeichnet,**
**dass** der konvergente Leitungsabschnitt (3) und der divergente Leitungsabschnitt (6) so zueinander ausgerichtet sind, dass die erste Längsachse (4) die zweite Längsachse (7) in einem Schnittwinkel zwischen 5° und 85° schneidet.

3. Lavaldüse nach Anspruch 1 oder 2,
**dadurch gekennzeichnet,**
**dass** zwischen dem konvergenten Leitungsabschnitt (3) und dem divergenten Leitungsabschnitt (6) ein kurzer Abschnitt mit konstant engem Querschnitt angeordnet ist.

4. Turbine (2), insbesondere zur Wärmerückgewinnung, mit
- einer drehbar gelagerten Abtriebswelle zum Abführen einer mechanischen Abtriebsarbeit eines Arbeitsfluids und
- mindestens einem mit der Abtriebswelle mechanisch verbundenen Laufrad (8) zum Drehen der Abtriebswelle mittels einer Strömung (5) des Arbeitsfluids,
**gekennzeichnet durch**
mindestens eine mit dem Laufrad (8) fluidisch verbundene Lavaldüse (1) nach einem der Ansprüche 1, 2 oder 3 zum Einleiten der Strömung (5) in das Laufrad (8).

5. Turbine nach Anspruch 4,
**dadurch gekennzeichnet,**
**dass** der divergente Leitungsabschnitt (6) und das Laufrad (8) so zueinander ausgerichtet sind, dass die Lavaldüse (1) die Strömung (5) in einem Eintrittswinkel zwischen 5° und 45° in das Laufrad (8) einleitet.

6. Turbine nach Anspruch 4 oder 5,
**gekennzeichnet durch**
mindestens zwei mit dem Laufrad (8) fluidisch verbundene Lavaldüsen (1).

7. Verfahren zur Herstellung einer Lavaldüse (1) aus einem Werkstück (9), insbesondere einer Platte, mit einer Eintrittsseite (10) und einer der Eintrittsseite (10) gegenüberliegenden Austrittsseite (11), umfassend
- eine spanende Formgebung des Werkstücks (9) auf der Eintrittsseite (10) entlang einer ersten Längsachse (4) und auf der Austrittsseite (11) entlang einer die erste Längsachse (4) schneidenden zweiten Längsachse (7),
**dadurch gekennzeichnet,**
**dass** die Formgebung derart erfolgt, dass ein in die Eintrittsseite (10) einmündender konvergenter Leitungsabschnitt (3) und ein mit dem konvergenten Leitungsabschnitt (3) verbundener, in die Austrittsseite (11) ausmündender divergenter Leitungsabschnitt (6) in dem Werkstück (9) entstehen.

8. Verfahren nach Anspruch 7,
**dadurch gekennzeichnet,**
**dass** die Formgebung mittels einer geometrisch bestimmten Schneide, insbesondere durch Fräsen oder Bohren erfolgt.

9. Verfahren nach Anspruch 8,
**dadurch gekennzeichnet,**
**dass** die Formgebung zunächst auf der Austrittsseite (11) und danach auf der Eintrittseite (10) erfolgt.

10. Verfahren nach Anspruch 9,
**dadurch gekennzeichnet,**
**dass** die Formgebung
- eine Senkbewegung eines rotierenden Kugelfräswerkzeugs (12) in die Eintrittsseite (10) bis zu einer vorgegebenen Solltiefe,
- eine im Wesentlichen quer zu der Senkbewegung gerichtete erste Querbewegung des Kugelfräswerkzeugs (12) in der Eintrittsseite (10), bis sich der konvergente Leitungsabschnitt (3) und der divergente Leitungsabschnitt (6) in einer Öffnung (13) verbinden,
- eine Messung eines geometrischen Öffnungsmaßes (a₁) der Öffnung (13),
- eine Berechnung eines geometrischen Distanzmaßes (14) aus dem gemessenen Öffnungsmaß (a₁) und einem vorgegebenen geometrischen Endmaß (a₂) der Öffnung (13) und
- eine der ersten Querbewegung gleichgerichtete zweite Querbewegung um das berechnete Distanzmaß (14)
umfasst.

11. Verfahren nach Anspruch 10,
**gekennzeichnet durch**
eine spanende Nachbearbeitung der Öffnung (13) mittels einer geometrisch unbestimmten Schneide, insbesondere **durch** Strahlen.
